# EUROPÄISCHE PATENTSCHRIFT

(11) **EP 2 555 294 B1**
(45) Veröffentlichungstag und Bekanntmachung des Hinweises auf die Patenterteilung: **29.06.2016**
(21) Anmeldenummer: 12177804.7
(22) Anmeldetag: 25.07.2012
(51) Int. Cl.: H01M 6/50, H01M 10/44

(54) **Verfahren zum Beseitigen oder zum Reduzieren der Dicke einer Passivierungsschicht auf einer Elektrode einer Batterie**
Method for removing or reducing the thickness of a passivation layer on an electrode of a battery
Procédé d'élimination ou de réduction de l'épaisseur d'une couche de passivation sur une électrode d'une batterie

(30) Priorität: 04.08.2011 DE 102011052425
(43) Veröffentlichungstag der Anmeldung: 06.02.2013
(73) Patentinhaber: Atral-Secal GmbH, 66131 Saarbrücken (DE)
(72) Erfinder: Schaaf, Norbert, 65343 Eltville (DE); Kroh, Christoph, 65510 Idstein-Walsdorf (DE)
(74) Vertreter: Fuchs Patentanwälte Partnerschaft mbB

(56) Entgegenhaltungen:
- WO-A1-98/08265
- US-A- 4 839 248
- US-A- 5 847 538
- US-A1- 2003 186 111

## Beschreibung

Die vorliegende Erfindung betrifft ein Verfahren zum Beseitigen oder zum Reduzieren der Dicke einer Passivierungsschicht auf einer Elektrode einer primären Batterie. Weiterhin betrifft die Erfindung eine Vorrichtung zum Ausführen des entsprechenden Verfahrens.

Die allgemeine technologische Entwicklung zeigt während der letzen Jahre eine deutliche Erhöhung von Geräten mit eigener Spannungsversorgung. Dies betrifft die netzunabhängige Versorgung von Geräten im militärischen und industriellen Bereich, aber auch in der Sicherheitstechnik und von Geräten zur Unterstützung von Dienstleistungen, wie zum Beispiel Energiezähler und Heizkostenverteiler. Diese Entwicklung wird zum einen dadurch gefördert, dass der zum Betreiben der Geräte benötigte Strombedarf gesunken ist, ohne dabei Einschränkungen der grundsätzlichen Funktionalität und der Leistungsfähigkeit hinnehmen zu müssen, und zum anderen, dass sich die Speicherkapazitäten der Energiespeicher, insbesondere der Batterien, stetig erhöhen.

Bei den Energiespeichern hat sich insbesondere die Lithiumbatterie als besonders geeignet hervorgetan. Die Lithiumbatterie ist eine Primärzelle, bei der das Lithium als aktives Material in der negativ geladenen Elektrode verwendet wird. Aufgrund des hohen Standardpotentials von Lithium und der daraus resultierenden hohen Feldspannung und der einhergehenden hohen Kapazität ist Lithium ein besonders geeignetes Elektrodenmaterial für eine Batterie. Lithiumbatterien weisen eine höhere Energiedichte, eine höhere Zellspannung und eine lange Lagerfähigkeit infolge einer geringeren Selbstentladung über einen weiten Temperaturbereich auf.

Bei fast allen Lithiumbatterien kann jedoch durch verschiedene Effekte wie eine erhöhte Temperatur eine Passivierung der Anode festgestellt werden, die Spannungseinbrüche zu Beginn einer Stromabnahme durch einen Verbraucher vergrößert, da die Passivierung den Stromfluss zwischen Anode und Kathode erschwert. Besonders anfällig für Passivierungen sind Lithium-Thionylchlorid- und Lithium-Mangandioxid-Batterien, insbesondere dann, wenn die Anode bei Temperaturen von über 30°C gelagert wird, wobei sich eine Passivierungsschicht um die Anode bildet. Ab einer gewissen Dicke der Passivierungsschicht kommt es dazu, dass der zum Betreiben eines Verbrauchers benötigte Strom der Batterie nicht mehr im erforderlichen Umfang entnommen werden kann.

Diesem Problem kann im Wesentlichen auf zwei verschiedene Möglichkeiten begegnet werden: Zum einen kann mit einer mechanischen Einwirkung von außen bewirkt werden, dass die Passivierungsschicht entweder an bestimmten Stellen aufplatzt oder aufreißt, so dass der Strom an den aufgeplatzten oder aufgerissenen Stellen wieder vollständig fließen kann. Diese Möglichkeit erweist sich aber in der Umsetzung als wenig praktikabel und ist im Wesentlichen dem Laborbetrieb vorbehalten.

Zum anderen kann die Passivierungsschicht durch Abnehmen eines relativ hohen Stroms in der Größenordnung von 50 bis 100 Milliampere weggebrannt werden. Nachteilig hieran ist, dass in diesem Fall die Kapazität der Batterie schnell ausgeschöpft wird und sie daher nur für kurze Zeit verwendbar ist, was im Hinblick auf einen ressourcenschonenden Umgang mit elektrischer Energie praktisch nur bedingt umzusetzen ist. Die meisten Verbraucher sind heutzutage aus Energiespargründen so ausgelegt, dass sie nur einen sehr geringen Strombedarf im Bereich von wenigen Mikroampere haben. Allerdings wird selbst bei niedrigem Strombedarf das Bilden einer Passivierungsschicht nicht verhindert. Ein Wegbrennen der Passivierungsschicht ist bei einer derartigen Auslegung nicht möglich.

Ein Verfahren und eine Schaltungsanordnung zum Depassivieren einer Batterie werden in der WO 98/08265 A1 beschrieben. Bei dem Verfahren zum Depassivieren einer Batterie, insbesondere einer Lithium Back-up-Batterie wird durch periodisches Zuschalten einer Hilfslast ein impulsförmiger Depassivierungsstrom entnommen, und es wird bei jedem periodischem Anschalten der Hilfslast an die Batterie die Batteriespannung mit einem Referenzwert verglichen, wobei
a) falls die Batteriespannung oberhalb des Referenzwertes liegt, die Hilfslast nach einer kurzen Zeitspanne abgeschaltet wird, oder
b) falls die Batteriespannung unterhalb des Referenzwertes liegt, die Hilfslast während eines Zeitraums innerhalb einer zweiten, längeren Zeitspanne an die Batterie geschaltet bleibt.

Problematisch bei diesem Verfahren ist, dass die Batterie stärker belastet wird als für die Depassivierung unbedingt nötig. Grund hierfür ist der periodisch erfolgende schematische Vergleich der Batteriespannung mit einem Referenzwert und die schematische Entscheidung, dass eine Depassivierung zu erfolgen hat, sofern die Batteriespannung nur unterhalb des Referenzwertes liegt. Andere Entscheidungsparameter werden nicht berücksichtigt, so dass die Kapazität der Batterie nicht schonend genug genutzt werden kann.

Aufgabe der vorliegenden Erfindung vor diesem Hintergrund ist es, ein Verfahren anzugeben, mit dem insbesondere die eingangs genannten Lithiumbatterien auch in Geräten mit geringem Strombedarf verwendbar sind und gleichzeitig die Kapazität der Batterie schonend genutzt werden kann.

Gelöst wird die Aufgabe durch ein Verfahren zum Beseitigen oder zum Reduzieren der Dicke einer Passivierungsschicht auf einer Elektrode einer Batterie, umfassend folgende Schritte:
- Bereitstellen einer Batteriespannung mittels der Batterie , wobei die Batteriespannung mittels einer Spannungsmesseinheit gemessen wird,
- Abnehmen eines Stroms von der Batterie für eine erste Zeitspanne mittels eines Verbrauchers, wobei die erste Zeitspanne der Stromabnahme mittels einer Steuereinheit vorgebbar ist, die mit der Spannungsmesseinheit in Wechselwirkung tritt,
- Messen der Batteriespannung während der Stromabnahme mittels der Spannungsmesseinheit,
- Vergleichen der gemessenen Batteriespannung während der Stromabnahme mit einem vorgebbaren ersten Schwellenwert mittels der Steuereinheit, und
- Abnehmen eines Stroms für eine zweite Zeitspanne, die eine Verlängerungder ersten Zeitspanne ist, mittels des Verbrauchers, wenn die gemessene Batteriespannung während der Stromabnahme gleich oder kleiner ist als der erste Schwellenwert, wobei die zweite Zeitspanne mittels der Steuereinheit vorgebbar ist,
- Bestimmen einer Temperatur in der Batterie oder der Umgebung der Batterie mittels einer Temperaturmesseinheit, und
- Vergleichen der bestimmten Temperatur mit einer vorgebbaren Schwellentemperatur mittels der Steuereinheit, wobei die erste Zeitspanne nur dann in die zweite oder dritte Zeitspanne geändert wird, wenn die bestimmte Temperatur oberhalb der Schwellentemperatur liegt.

Infolge der Stromabnahme durch den Verbraucher sinkt die Batteriespannung in der Batterie. Durch Vergleich der während der Stromabnahme durch den Verbraucher mittels der Spannungsmesseinheit gemessenen Batteriespannung mit dem ersten Schwellenwert kann eine Aussage darüber ge-macht werden, ob die Passivierungsschicht eine Dicke erreicht hat, die den Elektronenfluss zwischen Kathode und Anode über ein akzeptables Maß hinaus reduziert und somit die Effizienz der Batterie spürbar beeinträchtigt.

Das erfindungsgemäße Verfahren kann in zwei Betriebsweisen unterteilt werden: die erste Betriebsweise repräsentiert den Normalbetrieb, in welcher die während der Stromabnahme gemessene Batteriespannung oberhalb des ersten Schwellenwertes liegt. Die zweite Betriebsweise ist diejenigen, bei der die Passivierungsschicht eine Dicke überschritten hat, die dazu führt, dass der Elektronenfluss zwischen der Kathode der Anode spürbar beeinträchtigt ist und somit die Batteriespannung während der Stromabnahme unter dem ersten Schwellenwert liegt.

Während der zweiten Betriebsweise wird der Strom im Vergleich zur ersten Betriebsweise für die Dauer der zweiten Zeitspanne entnommen, die länger ist als die Dauer der ersten Zeitspanne. Für den Betrieb des Verbrauchers genügt jedoch die erste Zeitdauer. Durch die längere Einwirkung des Elektrodenflusses auf die Elektroden wird die Dicke der Passivierungsschicht reduziert, gleichzeitig aber die Batterie stärker belastet als nötig.

Die zweite Betriebsweise wird erfindungsgemäß jedoch nur dann gewählt, wenn die gemessene Batteriespannung infolge der Ausbildung der Passivierungsschicht den ersten Schwellenwert unterschritten hat. Erfindungsgemäß ist somit gewährleistet, dass mit der Kapazität der Batterie schonend umgegangen wird, so dass ihre Betriebsdauer verglichen mit einer hypothetischen Vergleichsbatterie, die keine Passivierungsschicht bildet, unwesentlich verringert wird. Gleichzeitig wird jedoch sichergestellt, dass die Dicke der Passivierungsschicht sofort verringert wird, sobald sie ein kritisches Maß überschritten hat und damit den Elektronenfluss spürbar verringert. Das erfindungsgemäße Verfahren sorgt folglich dafür, dass der Elektronenfluss im optimalen Bereich gehalten wird.

Dabei liegt der Erfindung die überraschende Erkenntnis zugrunde, dass die Dicke der Passivierungsschicht nicht nur durch einen stärkeren Strom, sondern auch nur durch eine längere Stromabnahme eines schwachen Stroms verringert werden kann, auch wenn der für eine längere Zeitspanne abgenommene Strom dieselbe Stärke aufweist wie der Strom, der zur Ausbildung der Passivierungsschicht geführt hat.

Das erfindungsgemäße Verfahren wird vorzugsweise mit Lithium-Thionylchlorid- und Lithium-Mangandioxid-Batterien durchgeführt, da diese einerseits eine höhere Energiedichte, eine höhere Zellspannung und eine lange Lagerfähigkeit infolge einer geringeren Selbstentladung über einen weiten Temperaturbereich aufweisen, andererseits jedoch besonders anfällig für die Ausbildung einer Passivierungsschicht sind. Mit Lithium-Thionylchlorid- und Lithium-Mangandioxid-Batterien treten die Vorteile des erfindungsgemäßen Verfahrens besonders deutlich zu Tage.

Unterhalb der erwähnten Schwellentemperatur steigt der Innenwiderstand der Batterie stark an, was zu einer Verringerung der Batteriespannung führt. Um zu verhindern, dass in diesem Fall eine Stromabnahme für eine zweite oder dritte Zeitspanne ausgelöst wird, geht die Temperatur der Batterie mit in die Entscheidung darüber ein, ob die Stromabnahme für eine längere Zeitspanne durchgeführt werden soll. Hierdurch wird verhindert, dass der gestiegene Innenwiderstand fälschlicherweise der Bildung einer Passivierungsschicht zugeschrieben wird. Eine unnötige Verlängerung der Stromabnahme wird somit verhindert. Dabei kann die Temperatur direkt innerhhalb der Batterie gemessen werden, oder aber die Temperatur der unmittelbaren Umgebung, in der sich die Batterie befindet.

Das erfindungsgemäße Verfahren beinhaltet vorzugsweise weiterhin folgende Schritte:
- Vergleichen der gemessenen Batteriespannung mit dem ersten Schwellenwert mittels der Steuereinheit, nachdem der Strom für die zweite Zeitspanne abgenommen worden ist, und
- Abnehmen eines Stroms für die erste Zeitspanne, wenn die gemessene Batteriespannung während der Stromabnahme größer ist als der erste Schwellenwert oder Abnehmen eines Stroms für die zweite oder eine dritte Zeitspanne, die länger ist als die erste Zeitspanne, wenn die gemessene Batteriespannung gleich oder größer ist als ein zweiter Schwellenwert, der niedriger ist als der erste Schwellenwert, wobei die dritte Zeitspanne von der Steuereinheit vorgebbar ist.

Die zweiten und dritten Zeitspannen sind länger als die erste. In dieser Ausführungsform des erfindungsgemäßen Verfahrens wird der Strom nur dann für die Dauer der zweiten oder dritten Zeitspanne abgenommen, wenn die gemessene Batteriespannung während der Stromabnahme kleiner als der erste Schwellenwert ist. Der Schritt des Abnehmens des Stroms für die zweite oder dritte Zeitspanne wird solange fortgesetzt, bis dass die gemessene Batteriespannung während der Stromabnahme größer ist als der erste Schwellenwert. Somit wird gewährleistet, dass die verlängerte Stromabnahme auf ein Minimum reduziert und möglichst schnell wieder in die erste Betriebsweise zurückgekehrt wird. Das erfindungsgemäße Verfahren geht folglich mit der Kapazität der Batterie sehr sparsam um, stellt aber gleichzeitig auch sicher, dass die Dicke der Passivierungsschicht verringert wird, sobald sie eine kritische Dicke überschritten hat.

Wird das Wachstum der Passivierungsschicht nicht verhindert, sinkt die Batteriespannung während der Stromabnahme ab einem gewissen Zeitpunkt auf ein Maß, bei dem der Verbraucher nicht mehr bestimmungsgemäß betrieben werden kann, obwohl die Betriebsspannung vor der Stromabnahme noch hoch genug wäre, um den Verbraucher funktionsgerecht zu betreiben, wenn keine Passivierungsschicht oder eine Passivierungsschicht mit nur einer geringen Dicke vorhanden wäre. Mit dem erfindungsgemäßen Verfahren kann die Batterie bis zu 2,5-mal länger zum Betreiben der Verbraucher werden kann als dann, wenn das erfindungsgemäße Verfahren nicht zur Anwendung kommt.

Vorzugsweise ist eine Mehrzahl von Verbrauchern mit unterschiedlichem Strombedarf vorhanden, die einen unterschiedlich starken Strom von der Batterie abnimmt, wobei die Batteriespannung während der Stromabnahme des Verbrauchers mit dem höchsten Strombedarf gemessen und der stärkste Strom für die zweite oder dritte Zeitspanne abgenommen wird. In dieser Ausführungsform werden zwei oder mehrere Verbraucher mit der Batterie betrieben, die jeweils einen unterschiedlichen Strombedarf aufweisen und folglich einen unterschiedlich starken Strom abnehmen. In diesem Fall wird die Batteriespannung während der Stromabnahme desjenigen Verbrauchers gemessen, der den höchsten Strombedarf aufweist und somit den stärksten Strom entnimmt. Die dann gemessene Spannung wird mit dem ersten Schwellenwert verglichen. Dies ist insofern zweckmäßig, als dass während der Abnahme des stärksten Stroms auch die Batteriespannung am stärksten einbricht und somit der Schwellenwert zuerst unterschritten wird. Darüber hinaus wird der stärkste Strom für die zweite oder dritte Zeitspanne abgenommen, wenn der Schwellenwert unterschritten wird. Je stärker der Strom ist, desto schneller lässt sich die Dicke der Passivierungsschicht verringern, so dass der Stromfluss zwischen Kathode und Anode wieder optimal ist. Durch diese Verfahrensführung kann sehr schnell wieder in die erste Betriebsweise zurückgekehrt und die Kapazität der Batterie zum Betreiben der Verbraucher verwendet werden. Bei gleichzeitiger Stromabnahme mehrerer Verbraucher gilt entsprechendes.

In einer vorteilhaften Weiterbildung des erfindungsgemäßen Verfahrens ist die dritte Zeitspanne kleiner als die zweite Zeitspanne. Hierdurch ergibt sich folgender Vorteil: Liegt die gemessene Batteriespannung während der Stromabnahme unter dem ersten Schwellenwert, so wird erfindungsgemäß die Zeitspanne der Stromabnahme von der ersten Zeitspanne auf die zweite Zeitspanne erhöht. Durch die verlängerte Stromabnahme wird die Dicke der Passivierungsschicht reduziert. Sollte die Dicke jedoch nicht so weit reduziert worden sein, dass die gemessene Batteriespannung während der Stromabnahme wieder über dem ersten Schwellenwert liegt, würde die Stromabnahme zumindest für einen weiteren Zyklus wiederum für die längere zweite Zeitspanne durchgeführt. Hierbei kann der Fall eintreten, dass die Dicke der Passivierungsschicht stärker reduziert wird als nötig, um die gemessene Batteriespannung während der Stromabnahme über den ersten Schwellenwert zu bringen. Der Strom würde somit für eine längere Zeitspanne als nötig abgenommen. Dem kann dadurch begegnet werden, dass sie dritte Zeitspanne kleiner als die zweite Zeitspanne ist.

Eine Fortbildung des erfindungsgemäßen Verfahrens zeichnet sich dadurch aus, dass die Dauer der dritten Zeitspanne gemäß einem wählbaren Algorithmus der Dauer der ersten Zeitspanne angenähert wird, wobei der Algorithmus in der Steuereinheit hinterlegbar ist. Dieser Algorithmus kann beispielsweise auf Erfahrungen beruhen, die aus Messungen gewonnen wurden. Ziel dieser Algorithmen kann sein, dass die Dicke der Passivierungsschicht nur so weit durch eine verlängerte Stromabnahme reduziert wird, dass die Batteriespannung während der Stromabnahme nur etwas über dem ersten Schwellenwert liegt. Auch ist es möglich, eine Regelung durchzuführen, bei der die gemessene Batteriespannung während der Stromabnahme dazu verwendet wird, die Dauer der dritten Zeitspanne zu bestimmen. Ist beispielsweise eine Batteriespannung während der Stromabnahme gemessen worden, die unter dem ersten Schwellenwert liegt und ist der Strom für die Dauer der zweiten Zeitspanne abgenommen worden, liegt jedoch die Batteriespannung während der folgenden Stromabnahme nach wie vor unter dem ersten Schwellenwert, so kann die Änderung von zwei oder mehreren aufeinanderfolgenden gemessenen Batteriespannungen während der Stromabnahme als Maß für die Länge der dritten Zeitspanne verwendet werden. Die dritte Zeitspanne kann so gewählt werden, dass sie gerade lang genug ist, um die Dicke der Passivierungsschicht auf ein Maß zu reduzieren, so dass die gemessene Batteriespannung über dem ersten Schwellenwert liegt. Auch hierdurch wird die Batterie ressourcenschonend betrieben.

Vorteilhafterweise wird die erste Zeitspanne nur dann in die zweite oder dritte Zeitspanne geändert, wenn die Batteriespannung während der Stromabnahme oberhalb eines mittels der Steuereinheit vorgebbaren zweiten Schwellenwertes liegt. Liegt die Batteriespannung während der Stromabnahme unterhalb des zweiten Schwellenwertes, so weist die Batterie nur noch eine geringe Restkapazität auf. Eine Stromabnahme für die zweite oder dritte Zeitspanne könnte dann dazu führen, dass die restliche Kapazität der Batterie vollständig aufgebraucht werden würde. In diesem Fall wird auf die Reduzierung der Dicke der rungsschicht zu Gunsten der noch verbliebenen Restkapazität verzichtet. Hierbei wird der zweite Schwellenwert so gewählt, dass die mit der Batterie betriebenen Verbraucher gerade noch ihren bestimmungsgemäßen Gebrauch nachkommen können.

Vorzugsweise liegt der zweite Schwellenwert niedriger als der erste Schwellenwert. In dieser Ausgestaltung berücksichtigt das erfindungsgemäße Verfahren beide Schwellenwerte. Die Stromabnahme wird hierdurch nochmals ressourcenschonender gestaltet.

Das erfindungsgemäße Verfahren wird im Folgenden anhand eines bevorzugten Ausführungsbeispiels unter Bezugnahme auf die an hängenden Zeichnungen im Detail erklärt. Es zeigen
- Figur 1: den mittels eines Verbrauchers von einer Batterie abgenommenen Strom über einen Zeitabschnitt,
- Figur 2: den entsprechende Verlauf der Batteriespannung über derselben Zeitabschnitt, und
- Figur 3: eine Vorrichtung zum Ausführen des erfindungsgemäßen Verfahrens.

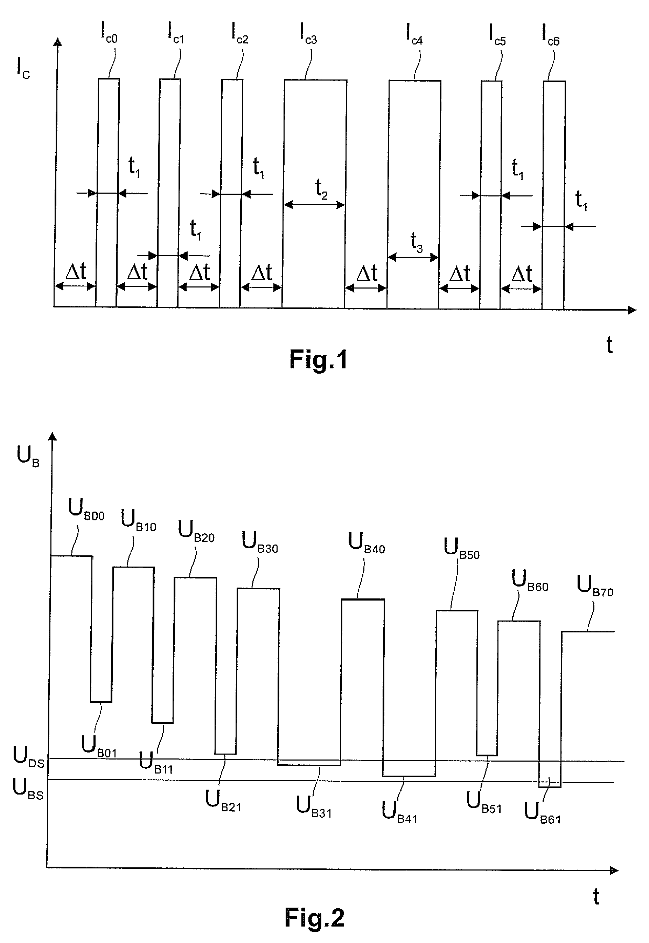

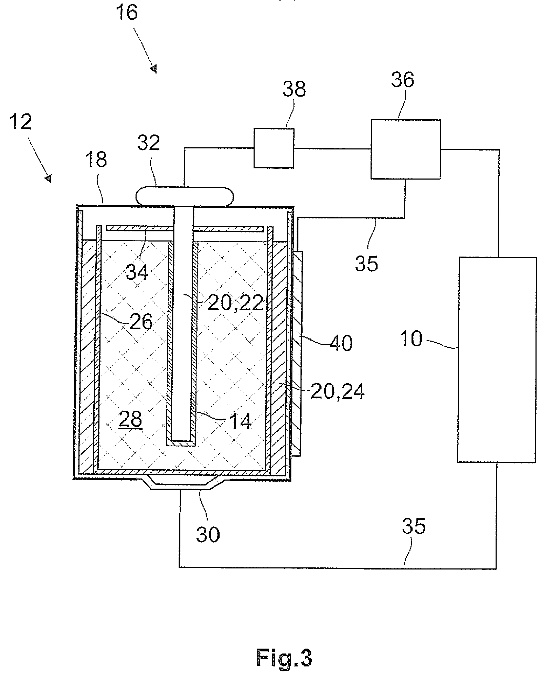

Die Figuren 1 und 2 stellen das erfindungsgemäße Verfahren in graphischer Form dar. Figur 1 zeigt den von einem Verbraucher 10 von einer Batterie 12 entnommenen Strom I_{C} über einen Zeitabschnitt t, wobei die Stromabnahmen I_{C0} bis I_{C6} gezeigt sind, während in Figur 2 die Entwicklung der Batteriespannung U_{B} infolge der Stromabnahmen I_{CN} während desselben Zeitabschnitts t dargestellt ist (vgl. auch Figur 3).

Zu Beginn des betrachteten Zeitabschnitts t weist die Batteriespannung den Wert U_{B00} auf (vgl. Figur 2). In regelmäßigen Zeitabständen Δt nimmt der Verbraucher 10 eine Leistung für die Dauer einer ersten Zeitspanne t₁ ab. Die Stromabnahme kann dabei impulsartig erfolgen, so dass die erste Zeitspanne t₁ sehr kurz sein und z.B. eine Sekunde oder weniger, beispielsweise 10 bis 20 msec betragen kann. Der Zeitabstand Δt kann beispielsweise 60 sec betragen. Im dargestellten Beispiel ist der Zeitabstand Δt immer gleich. Er kann aber auch geändert werden, beispielsweise kann er nach einer Stromabnahme für die Dauer der zweiten Zeitspanne t₂ verkürzt werden.

Man erkennt, dass beispielsweise während der nullten Stromabnahme I_{C0} für die Dauer der ersten Zeitspanne t₁ die Batteriespannung U_{B} vom Wert U_{B00} auf den Wert U_{B01} sinkt, der jedoch über einem ersten Schwellenwert U_{DS} liegt. Die nullte Stromabnahme I_{C0} hat zur Folge, dass die Batteriespannung U_{B} nach Beendigung der nullten Stromabnahme I_{C0} nicht mehr auf den ursprünglichen Wert U_{B00} zurückgeht, sondern sich etwas auf den Wert U_{B10} verringert.

Nach einem weiteren Δt von 60 sec erfolgt eine erneute Stromabnahme I_{C}, nämlich die erste Stromabnahme I_{C1}. Da die Batteriespannung U_{B11} wiederum über dem ersten Schwellenwert U_{DS} liegt, erfolgt auch die erste Stromabnahme I_{C1} für die Dauer der ersten Zeitspanne t₁. Selbiges gilt auch für die zweite Stromabnahme I_{C2}.

Aufgrund der sich erhöhenden Dicke einer Passivierungsschicht 14 (vgl. Figur 3) liegt die Batteriespannung U_{B31} unterhalb des ersten Schwellenwertes U_{DS}, so dass erfindungsgemäß die dritte Stromabnahme I_{C3} nicht mehr für die Dauer der ersten Zeitspanne t₁, sondern für eine im Vergleich zur ersten Zeitspanne t₁ längere zweite Zeitspanne t₂ erfolgt. Die anschließende Messung der Batteriespannung U_{B41} ergibt im dargestellten Beispiel jedoch, dass sie immer noch unter dem ersten Schwellenwert U_{DS} liegt. Folglich erfolgt auch die vierte Stromabnahme I_{C4} nicht für die Dauer der ersten Zeitspanne t₁, sondern für die Dauer einer dritten Zeitspanne t₃, die länger als die erste Zeitspanne t₁, aber kürzer als die zweite Zeitspanne t₂ ist.

Die nach der vierten Stromabnahme I_{C4} und während der fünften Stromabnahme I_{C5} gemessene Spannung U_{B51} liegt jedoch wieder über dem ersten Schwellenwert, so dass die fünfte Stromabnahme I_{C5} wiederum für die Dauer der ersten Zeitspanne t₁ erfolgt. Während der sechste Leistungsentnahme I_{C6} liegt die Batteriespannung U_{B61} unterhalb eines zweiten Schwellenwertes U_{BS}, der niedriger als der erste Schwellenwert U_{DS} ist. In diesem Fall erfolgt die Stromabnahme für die Dauer der ersten Zeitspanne t₁, auch wenn die Batteriespannung unter dem ersten Schwellenwert U_{DS} liegt. Der zweite Schwellenwert U_{BS} ist so bemessen, dass er einer Batteriespannung U_{B} entspricht, die das bestimmungsgemäße Betreiben des Verbrauchers 10 sicherstellt.

In Figur 3 ist eine erfindungsgemäße Vorrichtung 16 zum Beseitigen einer Passivierungsschicht 14 oder zum Reduzieren der Dicke der Passivierungsschicht 14 anhand einer Prinzipdarstellung gezeigt, mit welcher das erfindungsgemäße Verfahren durchführbar ist. Die Vorrichtung 16 umfasst die oben beschriebene Batterie 12, die insbesondere als Lithium-Thionylchlorid- oder Lithium-Mangandioxid-Batterie 12 ausgeführt sind. Die Batterie 12 weist ein Gehäuse 18 auf, in welchem als Elektroden 20 eine Kathode 24 und eine Anode 22 angeordnet sind, die mittels eines Separators 26 voneinander getrennt sind. Innerhalb des Separators 26 ist weiterhin ein Kathodenkörper 28 angeordnet, der die Anode 22 umgibt und beispielsweise einen Polymer umfasst. Die Kathode 24 ist an ihrer radial äußeren Seite mit einem elektrisch leitenden Metall verbunden, welches am darstellungsgemäß unteren Ende der Batterie 12 über einen Durchbruch im Gehäuse 18 etwas nach außen hervorsteht und einen Minuspol 30 bildet. Um die Anode 22 herum kann sich die Passivierungsschicht 14 bilden.

An der Anode 22 ist ebenfalls ein aus einem elektrisch leitenden Metall bestehender Pluspol 32 angeordnet, der über das Gehäuse 18 darstellungsgemäß nach oben übersteht. Weiterhin ist ein Isolator 34 an der Anode 22 befestigt, der Kurzschlüsse innerhalb der Batterie 12 verhindert. Am Pluspol 32 und am Minuspol 30 sind elektrische Leitungen 35 angeschlossen, wodurch ein geschlossener Stromkreis erzeugt wird. Im Stromkreis sind eine Steuereinheit 36, eine Spannungsmesseinheit 38 sowie ein Verbraucher 10 angeordnet. Am Gehäuse 18 der Batterie 12 ist eine Temperaturmesseinheit 40 angeschlossen, die wiederum über die elektrischen Leitungen 35 mit der Steuereinheit 36 verbunden ist. Anstelle der elektrischen Leitungen kann auch eine drahtlose Verbindung zur Steuereinheit 36 verwendet werden, beispielsweise dann, wenn sich die Steuereinheit 36 zentral beim Hersteller oder beim Betreiber des Verbrauchers 10 befindet. In der Steuereinheit 36 sind die Algorithmen hinterlegt, mit welchen der Verbraucher 10 angesteuert wird, so dass er erfindungsgemäß den Strom aus der Batterie 12 entnimmt.

Der Verbraucher 10 entnimmt in regelmäßigen Abständen Strom von der Batterie 12. Die Zeitspanne, für die der Verbraucher 10 den Strom entnimmt, wird mit der Steuereinheit 36 vorgegeben. Im Ausgangszustand entnimmt der Verbraucher 10 den Strom für die Dauer der ersten Zeitspanne. Je nachdem, welche Spannung die Spannungsmesseinheit 38 während der Stromabnahme misst und welche Temperatur in der Batterie 12 oder deren Umgebung vorliegt, wird der Strom nicht für die erste Zeitspanne, sondern für die Dauer der zweiten oder dritten Zeitspanne entnommen. Die hierzu angewendeten Kriterien und Algorithmen sind bereits bei der Beschreibung des erfindungsgemäßen Verfahrens dargelegt worden, so dass auf eine Wiederholung verzichtet werden kann.

Als Ausführungsbeispiel kann beispielsweise ein Funk-Öffnungsmelder mit dem erfindungsgemäßen Verfahren betrieben werden. Als Verbraucher 10 ist ein Kontaktmelder mit einem Sender/Empfängermodul ausgestattet und sendet alle 90 sec eine Statusmeldung an einen zentralen Server, der die Steuereinheit 36 aufweist. Hierzu nimmt der Kontaktmelder einen Strom einer gewissen Stärke für die erste Zeitspanne ab. Kurz vor Beendigung der Sendung der Statusmeldung wird die Batteriespannung U_{B} gemessen. Stellt die Steuereinheit 36 fest, dass die Batteriespannung U_{B} unter den ersten Schwellenwert U_{DS} gefallen ist, wird der Empfänger für 45 sec eingeschaltet, um die Dicke der Passivierungsschicht zu reduzieren. Nachdem ein Strom für 45 sec abgenommen worden ist, wird ein Zeitabstand von 45 sec eingehalten, um sich von der Stromabnahme zu erholen. Dann wird erneut eine Statusmeldung an den Server abgeschickt. Um Effekte, die infolge der Stromabnahme auftreten und die zu Fehlinterpretationen führen können, auszuschließen, wird die erste Statusmeldung nach einer Stromabnahme nicht zum Ändern der Dauer der Stromabnahme berücksichtigt, so dass der Strom für die Dauer der ersten Zeitspanne abgenommen wird. Erst die zweite Statusmeldung nach einer Stromabnahme geht in die Entscheidung der Steuereinheit ein, die Dauer der Zeitspanne der Stromentnahme zu ändern oder nicht.

### Bezugszeichenliste

- 10: Verbraucher
- 12: Batterie
- 14: Passivierungsschicht
- 16: Vorrichtung
- 18: Gehäuse

- 20: Elektrode
- 22: Anode
- 24: Kathode
- 26: Separator
- 28: Kathodenkörper

- 30: Minuspol
- 32: Pluspol
- 34: Isolator
- 35: elektrische Leitung
- 36: Steuereinheit
- 38: Spannungsmesseinheit
- 40: Temperaturmesseinheit

- I_{C}: entnommener Strom
- U_{B}: Batteriespannung
- U_{DS}: erster Schwellenwert
- U_{BS}: zweiter Schwellenwert
- t₁: erste Zeitspanne
- t₂: zweite Zeitspanne
- t₃: dritte Zeitspanne
- Δt: Zeitabstand

## Patentansprüche

1. Verfahren zum Beseitigen oder zum Reduzieren der Dicke einer Passivierungsschicht (14) auf einer Elektrode einer primären Batterie (12), umfassend folgende Schritte:
- Bereitstellen einer Batteriespannung (U_{B}) mittels der Batterie (12), wobei die Batteriespannung (UB) mittels einer Spannungsmesseinheit (38) gemessen wird,
- Abnehmen eines Stroms von der Batterie (12) für eine erste Zeitspanne (t₁) mittels eines Verbrauchers (10), wobei die erste Zeitspanne (t₁) der Stromabnahme mittels einer Steuereinheit (36) vorgebbar ist, die mit der Spannungsmesseinheit (38) in Wechselwirkung tritt,
- Messen der Batteriespannung (U_{B}) während der Stromabnahme mittels der Spannungsmesseinheit (38),
- Vergleichen der gemessenen Batteriespannung (U_{B}) während der Stromabnahme mit einem vorgebbaren ersten Schwellenwert (U_{DS}) mittels der Steuereinheit (36),
- Abnehmen eines Stroms für eine zweite Zeitspanne (t₂), die eine Verlängerung der ersten Zeitspanne (t₁) ist, mittels des Verbrauchers (10), wenn die gemessene Batteriespannung (U_{B}) während der Stromabnahme gleich oder kleiner ist als der erste Schwellenwert (U_{DS}), wobei die zweite Zeitspanne (t₂) mittels der Steuereinheit (36) vorgebbar ist,
- Bestimmen einer Temperatur der Batterie (12) oder der Umgebung der Batterie (12) mittels einer Temperaturmesseinheit (40),
- Vergleichen der bestimmten Temperatur mit einer vorgebbaren Schwellentemperatur mittels der Steuereinheit (36), wobei die erste Zeitspanne (t₁) nur dann in die zweite Zeitspanne (t₂) geändert wird, wenn die bestimmte Temperatur oberhalb der Schwellentemperatur liegt.

2. Verfahren nach Anspruch 1, **gekennzeichnet durch** die Schritte:
- Vergleichen der gemessenen Spannung mit dem ersten Schwellenwert U_{DS} mittels der Steuereinheit (36), nachdem der Strom für die zweite Zeitspanne (t₂) abgenommen worden ist, und
- Abnehmen eines Stroms für die erste Zeitspanne (t₁), wenn die gemessene Batteriespannung (U_{B}) während der Stromabnahme größer ist als der erste Schwellenwert U_{DS}oder Abnehmen eines Stroms für die zweite oder eine dritte Zeitspanne (t₃), die länger ist als die erste Zeitspanne (t₁), wenn die gemessene Batteriespannung (U_{B}) gleich oder größer ist als ein zweiter Schwellenwert U_{BS}, der niedriger ist als der erste Schwellenwert U_{DS}, wobei die dritte Zeitspanne (t₃) von der Steuereinheit (36) vorgebbar ist.

3. Verfahren nach einem der vorherigen Ansprüche, **dadurch gekennzeichnet, dass** eine Mehrzahl von Verbrauchern (10) mit unterschiedlichem Strombedarf vorhanden ist, die einen unterschiedlich starken Strom von der Batterie (12) abnimmt, wobei die Batteriespannung (U_{B}) während der Stromabnahme des Verbrauchers (10) mit dem höchsten Strombedarf gemessen und der stärkste Strom für die zweite oder dritte Zeitspanne (t₃) abgenommen wird.

4. Verfahren nach Anspruch 2 oder 3, **dadurch gekennzeichnet, dass** die dritte Zeitspanne (t₃) kleiner als die zweite Zeitspanne (t₂) ist.

5. Verfahren nach Anspruch 4, **dadurch gekennzeichnet, dass** die Dauer der dritten Zeitspanne (t₃) gemäß einem wählbaren Algorithmus der Dauer der ersten Zeitspanne (t₁) angenähert wird, wobei der Algorithmus in der Steuereinheit (36) hinterlegbar ist.

6. Verfahren nach einem der vorherigen Ansprüche, **dadurch gekennzeichnet, dass** die erste Zeitspanne (t₁) nur dann in die zweite oder dritte Zeitspanne (t₃) geändert wird, wenn die Batteriespannung (U_{B}) während der Stromabnahme oberhalb eines mittels der Steuereinheit (36) vorgebbaren zweiten Schwellenwertes (U_{BS}) liegt.

7. Verfahren nach Anspruch 6, **dadurch gekennzeichnet, dass** der zweite Schwellenwert (U_{BS}) niedriger als der erste Schwellenwert (U_{DS}) ist.

## Claims

1. Method of eliminating or reducing the thickness of a passivation layer (14) on an electrode of a primary battery (12), including the following steps:
- providing a battery voltage (U_{B}) by means of the battery (12), wherein the battery voltage (U_{B}) is measured by means of a voltage measuring unit (38);
- drawing current from the battery (12) for a first time period (t₁) by means of a load (10), wherein the first time period (t₁) of the current draw is presettable by means of a control unit (36) which interacts with the voltage measuring unit (38);
- measuring the battery voltage (U_{B}) during the current draw by means of the voltage measuring unit (38),
- comparing the measured battery voltage (U_{B}) during the current draw with a presettable first threshold value (U_{DS}) by means of the control unit (36),
- drawing current for a second time period (t₂), which is an extension of the first time period (t₁), by means of the load (10) when the measured battery voltage (U_{B}) during the current draw is equal to or smaller than the first threshold value (U_{DS}), wherein the second time period (t₂) is presettable by means of the control unit (36),
- determining a temperature of the battery (12) or the environment of the battery (12) by means of a temperature measuring unit (40),
- comparing the determined temperature with a presettable threshold temperature by means of the control unit (36), wherein the first time period (t₁) is changed into the second time period (t₂) only if the determined temperature is above the threshold temperature.

2. Method according to claim 1, **characterized by** the steps:
- comparing the measured voltage with the first threshold value (U_{DS}) by means of the control unit (36) after the current has been drawn for the second time period (t₂); and
- drawing current for the first time period (t₁) when the measured battery voltage (U_{B}) during the current draw is higher than the first threshold value (U_{DS}) or drawing current for the second or a third time period (t₃) which is longer than the first time period (t₁) when the measured battery voltage (U_{B}) is equal to or greater than a second threshold value (U_{BS}) which is lower than the first threshold value (U_{DS}), wherein said third time period (t₃) is presettable by the control unit (36).

3. Method according to any one of the preceding claims, **characterized in that** a plurality of loads (10) with different power demands are provided, which draw currents with different intensities from the battery (12), wherein the battery voltage (U_{B}) is measured during the current draw of the load (10) with the highest power demand, and the current with the highest intensity is drawn for the second or third time period (t₃).

4. Method according to claim 2 or 3, **characterized in that** the third time period (t₃) is shorter than the second time period (t₂).

5. Method according to claim 4, **characterized in that** the duration of the third time period (t₃) is approximated in accordance with a selectable algorithm to the duration of the first period of time (t₁), wherein said algorithm can be stored within the control unit (36).

6. Method according to any one of the preceding claims, **characterized in that** the first time period (t₁) is changed into the second or third time period (t₃) only if the battery voltage (U_{B}) during the current draw exceeds a second threshold value (U_{BS}) which is presettable by means of the control unit (36).

7. Method according to claim 6, **characterized in that** the second threshold value (U_{BS}) is lower than the first threshold value (U_{DS}).

## Revendications

1. Procédé d'élimination ou de réduction de l'épaisseur d'une couche de passivation (14) sur une électrode d'une batterie primaire (12), comprenant les étapes suivantes :
- mise à disposition d'une tension de batterie (U_{B}) au moyen de la batterie (12), la tension de batterie (U_{B}) étant mesurée au moyen d'une unité de mesure de tension (38),
- prélèvement d'un courant de la batterie (12) pendant un premier intervalle de temps (t₁) au moyen d'un consommateur (10), le premier intervalle de temps (t₁) de prélèvement de courant étant prescriptible au moyen d'une unité de commande (36) qui interagit avec l'unité de mesure de tension (38),
- mesure de la tension de batterie (U_{B}) pendant le prélèvement de courant au moyen de l'unité de mesure de tension (38),
- comparaison de la tension de batterie (U_{B}) mesurée pendant le prélèvement de courant avec une première valeur seuil prescriptible (U_{DS}) au moyen de l'unité de commande (36),
- prélèvement d'un courant pendant un deuxième intervalle de temps (t₂), qui est une prolongation du premier intervalle de temps (t₁), au moyen du consommateur (10), lorsque la tension de batterie (U_{B}) mesurée pendant le prélèvement de courant est égale ou inférieure à la première valeur seuil (U_{DS}), le deuxième intervalle de temps (t₂) étant prescriptible au moyen de l'unité de commande (36),
- détermination d'une température de la batterie (12) ou de l'environnement de la batterie (12) au moyen d'une unité de mesure de température (40),
- comparaison de la température déterminée avec une température seuil prescriptible au moyen de l'unité de commande (36), le premier intervalle de temps (t₁) étant changé en le deuxième intervalle de temps (t₂) seulement si la température déterminée se situe au-dessus de la température seuil.

2. Procédé selon la revendication 1, **caractérisé par** les étapes :
- comparaison de la tension mesurée avec la première valeur seuil U_{DS} au moyen de l'unité de commande (36) après que le courant a été prélevé pendant le deuxième intervalle de temps (t₂), et
- prélèvement d'un courant pendant le premier intervalle de temps (t₁) lorsque la tension de batterie (U_{B}) mesurée pendant le prélèvement de courant est supérieure à la première valeur seuil U_{DS} ou prélèvement d'un courant pendant le deuxième ou un troisième intervalle de temps (t₃) qui est plus long que le premier intervalle de temps (t₁) lorsque la tension de batterie (U_{B}) mesurée est égale ou supérieure à une deuxième valeur seuil U_{BS} qui est inférieure à la première valeur seuil U_{DS}, le troisième intervalle de temps (t₃) étant prescriptible par l'unité de commande (36).

3. Procédé selon l'une des revendications précédentes, **caractérisé en ce qu'**une pluralité de consommateurs (10) ayant une consommation de courant différente est prévue, lesquels prélèvent un courant d'intensité différente de la batterie (12), la tension de batterie (U_{B}) étant mesurée pendant le prélèvement de courant du consommateur (10) ayant la consommation de courant la plus élevée et le courant le plus intense étant prélevé pendant le deuxième ou troisième intervalle de temps (t₃).

4. Procédé selon la revendication 2 ou 3, **caractérisé en ce que** le troisième intervalle de temps (t₃) est plus petit que le deuxième intervalle de temps (t₂).

5. Procédé selon la revendication 4, **caractérisé en ce que** la durée du troisième intervalle de temps (t₃) est approchée de la durée du premier intervalle de temps (t₁) selon un algorithme sélectionnable, l'algorithme pouvant être enregistré dans l'unité de commande (36).

6. Procédé selon l'une des revendications précédentes, **caractérisé en ce que** le premier intervalle de temps (t₁) est changé en le deuxième ou troisième intervalle de temps (t₃) seulement lorsque la tension de batterie (U_{B}) se situe au-dessus d'une deuxième valeur seuil (U_{BS}) prescriptible au moyen de l'unité de commande (36) pendant le prélèvement de courant.

7. Procédé selon la revendication 6, **caractérisé en ce que** la deuxième valeur seuil (U_{BS}) est inférieure à la première valeur seuil (U_{DS}).
